# EUROPÄISCHE PATENTANMELDUNG

(11) **EP 3 395 702 A1**
(43) Veröffentlichungstag der Anmeldung: **31.10.2018**
(21) Anmeldenummer: 18164544.1
(22) Anmeldetag: 28.03.2018
(51) Int. Cl.: B65B 59/00, B65B 61/14, B65B 61/20, B65B 51/14, B65B 7/28, B29C 65/00

(54) **SIEGELVORRICHTUNG**

(30) Priorität: 28.04.2017 DE 102017109211
(71) Anmelder: MULTIVAC Sepp Haggenmüller SE & Co. KG, 87787 Wolfertschwenden (DE)
(72) Erfinder: HÖPNER, Bernd, 87437 Kempten (DE); ICKERT, Lars, 87437 Kempten (DE)
(74) Vertreter: Grünecker Patent- und Rechtsanwälte PartG mbB

(57) **Zusammenfassung**

Die erfindungsgemäße Siegelvorrichtung (1) für Verpackungen (7) umfasst eine Steuerung (16), eine Siegelstation (2), eine Abrollvorrichtung (17) für eine Folienbahn (18), eine stromaufwärts der Siegelstation (2) vorgesehene Schneidvorrichtung (19) zum Erzeugen von Folienabschnitten (8) der Folienbahn (18), eine Folienzuführvorrichtung (10) zum Zuführen der Folienabschnitte (8) an die Siegelstation (2), eine Transportvorrichtung (15) zum Transportieren von Verpackungen (7), in denen vorzugsweise Lebensmittel gasdicht verpackt sind, in die Siegelstation (2), wobei die Siegelstation (2) obere (3) und untere Siegelelemente (4) umfasst, die dazu konfiguriert sind, die Verpackung (7) und den Folienabschnitt (8) gemeinsam zwischen den unteren und oberen Siegelelementen (3, 4) zu klemmen und den Folienabschnitt (8) an die Verpackung (7) zu siegeln. Die erfindungsgemäße Siegelvorrichtung (5) zeichnet sich dadurch aus, dass die Siegelelemente (3, 4) während des Siegelprozesses synchron mit der sich kontinuierlich bewegenden Verpackung (7) mitbewegbar sind.

## Beschreibung

Die Erfindung bezieht sich auf eine Verpackungsanlage mit den Merkmalen des Anspruchs 1 sowie nach einem Verfahren gemäß Anspruch 10.

Aus der EP 3023339 A1 ist eine Siegelvorrichtung bekannt, um einen Folienstreifen gemeinsam mit einer Deckelfolie auf eine Schale aufzusiegeln und anschließend beide Folien entlang des Schalenrandes zu schneiden, so dass der Folienstreifen als Tragehilfe für die Verpackung dient und die Deckelfolie das in der Schale liegende Produkt gasdicht verpackt. Der Folienstreifen ist dabei in Transportrichtung der Schalen ausgerichtet. Das nachträgliche Schneiden beider Folien außerhalb des Schalenrandes ist aus optischen Ansprüchen nicht besonders vorteilhaft, da die Folien gegenüber der Siegelnaht nach außen überstehen.

Die WO 2014/091504 A1 zeigt eine Schalenverschließmaschine, bei der abfallfrei Folienabschnitte aus einer Folienbahn geschnitten werden, die dann der Siegelvorrichtung zum Verschließen von Schalen zugeführt werden. Diese Folienabschnitte sind als Deckelfolie zum gasdichten Verschließen von jeweils eine Schale vorgesehen und werden umlaufend auf den Schalenrand aufgesiegelt. Dabei ist der Überstand des Folienabschnitts nur minimal oder gar nicht vorhanden.

Um Informationen, wie spezielles Produktgewicht und einen daraus resultierenden Verkaufspreis, auf eine Verpackung aufzubringen, ist es üblich, bedruckte Etiketten auf die Verpackung zu spenden. Das Aufbringen solcher Etiketten ist bei Verpackungen unproblematisch, die eine ebene Deckelfolie aufweisen. Skinverpackungen mit nicht ebenem Folienverlauf können beispielsweise durch spezielle Etiketten gekennzeichnet werden, die sich über die Oberseite und zwei gegenüberliegenden Seitenflächen bis zur Unterseite erstrecken, wie aus der EP 1118542 A1 bekannt. Bei Skinverpackungen legt sich die Deckelfolie unter anderem sowohl an das Produkt wie auch an die Innenseiten der Schale an.

Aufgabe der vorliegenden Erfindung ist es, eine Vorrichtung zur Verfügung zu stellen, um schmales bahnförmiges Material auf Verpackungen wie insbesondere Skinpackungen anzubringen, vorzugsweise Informationen zu Gewicht und Preis beinhaltend.

Diese Aufgabe wird gelöst durch eine Siegelvorrichtung gemäß dem Anspruch 1 sowie durch ein Verfahren mit den Merkmalen des Anspruchs 10. Vorteilhafte Weiterbildungen der Erfindung sind in den Unteransprüchen angegeben.

Die erfindungsgemäße Siegelvorrichtung umfasst eine Steuerung, eine Siegelstation, eine Abrollvorrichtung für eine Folienbahn, eine stromaufwärts der Siegelstation vorgesehene Schneidvorrichtung zum Erzeugen von Folienabschnitten der Folienbahn, eine Folienzuführvorrichtung zum Zuführen der Folienabschnitte an die Siegelstation, und eine Transportvorrichtung zum Transportieren von Verpackungen, in denen vorzugsweise Lebensmittel gasdicht verpackt sind. Die Siegelstation umfasst obere und untere Siegelelemente, die dazu konfiguriert sind, die Verpackung und den Folienabschnitt gemeinsam zwischen den unteren und oberen Siegelelementen zu klemmen und den Folienabschnitt an die Verpackung zu siegeln. Die erfindungsgemäße Siegelvorrichtung zeichnet sich dadurch aus, dass die Siegelelemente während des Siegelprozesses synchron mit der sich kontinuierlich bewegenden Verpackung mitbewegbar sind. So müssen die Verpackungen anders als sonst für den Siegelvorgang üblich nicht angehalten werden. Dies führt zu einer Leistungssteigerung. Mit dieser erfindungsgemäßen Siegelvorrichtung ist es möglich, schmale Folienabschnitte von einer entsprechenden Folienbahn abfallfrei abzutrennen und auf Verpackungen ohne einen Überstand über eine Siegelnaht hinaus aufzusiegeln. Dabei können vor der Schneidstation bereits Gewichts- und Preisangaben mittels eines Druckers auf die Folienbahn aufgedruckt werden.

Vorzugsweise weist die Folienzuführvorrichtung mehrere Riemen, vorzugsweise Rundriemen oder Flachriemen auf, um Folienabschnitte hängend transportieren zu können. Dabei umfasst die Folienzuführvorrichtung eine Absaugvorrichtung, um die Folienabschnitte an der Unterseite der Riemen selbst während des Transports halten zu können. Alternativ kann auch ein Flachriemen mit Öffnungen vorgesehen sein. In diesem Fall wirkt die Absaugvorrichtung durch die Öffnungen und hält dadurch den Folienabschnitt.

In einer besonders Vorteilhaften Ausführung ist eine Wiegevorrichtung zum dynamischen Wiegen einzelner Verpackungen vorgesehen, um diese Verpackungen, die ungleichgewichtige Lebensmittel wie Fleisch beinhalten können, mit einem Verkaufspreis auszeichnen zu können.

Bevorzugt ist ein Drucker vorgesehen, um Produktinformationen, Codes oder Gewichts- und Preisangaben auf die Folienbahn oder die Folienabschnitte aufzudrucken. So kann der bedruckte Folienabschnitt ein bedrucktes Etikett ersetzen, welches auf der Sichtseite von Skinpackungen üblicherweise nicht oder nur sehr umständlich aufbringbar wäre.

Die Siegelelemente sind vorzugsweise kürzer als die Ränder der Verpackungen, an die der Folienabschnitt angesiegelt wird. Dies stellt eine konstruktiv besonders einfache und damit kostengünstig ausführbare Ausführung dar, die außerdem unabhängig von der Ausbildung des äußeren Bereichs des Schalenrandes ist.

In einer besonders geeigneten Ausführung ist eine Verfahreinheit zum Bewegen der Siegelelemente entlang der Produktionsrichtung vorgesehen. So kann der Siegelprozess während der Transportbewegung der Verpackung stattfinden und Start- bzw. Stopp-Zeiten werden vermieden und die Produktionsleistung gesteigert. Vorzugsweise weist die Verfahreinheit einen Servoantrieb oder einen Linearantrieb auf, um die Aufsynchronisierung der Bewegung der Siegelelemente auf die Bewegung der Verpackung durch die Steuerung möglichst schnell und exakt durchführen zu können.

Vorzugsweise sind wenigstens die unteren Siegelemente mittels eines oder mehrerer Verstellantriebe vertikal oder zu den entsprechenden oberen Siegelementen bewegbar, um die Siegelelemente zwischen einer geöffneten Stellung für eine Rückbewegung der Siegelelemente entgegen der Produktionsrichtung mittels der Verfahreinheit und einer geschlossenen Siegelstellung verstellen zu können. Optional können auch die oberen Siegelelemente zusätzlich einen oder mehrere Verstellantriebe aufweisen, um diese an die Verpackung in vertikaler Richtung heranzuführen.

In einer besonders geeigneten Siegelvorrichtung umfasst diese eine Querverstellung und/oder eine Höhenverstellung, um die Siegelelemente auf verschiedene Geometrien von Verpackungen einzustellen. Dies bewirkt eine höhere Flexibilität bzgl. der zu verarbeitenden Verpackungen.

Das erfindungsgemäße Verfahren zum Betrieb der Siegelvorrichtung zum Aufbringen eines schmaleren Folienabschnitts als die Breite der Verpackung, an die der Folienabschnitt angesiegelt wird, und zum Ansiegeln des Folienabschnitts an lediglich nur zwei gegenüberliegende Ränder der Verpackung zeichnet sich dadurch aus, dass die oberen Siegelemente und die unteren Siegelemente während des Siegelprozesses mit einer gemeinsamen synchronen Geschwindigkeit zusammen mit dem Folienabschnitt und der Verpackung in der Produktionsrichtung bewegt werden. So kann der Siegelvorgang während des Transportes ausgeführt und ineffiziente Prozesszeit für ein Stoppen und Wiederstarten vermieden werden. Vorzugsweise sind in der Verpackung vor dem Aufbringen des Folienabschnitts bereits Produkte wie ein Lebensmittel gasdicht verpackt. Insbesondere kann es sich im Rahmen der Erfindung bei der Verpackung um eine Skinpackung handeln, d. h. um eine mit einer Skinfolie gasdicht verschlossene Verpackung.

Bevorzugt weist die Steuerung eine Streckensteuerung auf, um die Position der Folienabschnitte und der Verpackungen zu verfolgen, um so die Zusammenführung eines Folienabschnitts und der dazugehörigen Verpackung zu steuern und/oder zu kontrollieren. Dadurch kann sichergestellt werden, dass bei einer Preisauszeichnung das Gewicht einer Verpackung und der Folienabschnitt mit der dazugehörigen Gewichts- und Preisangabe in der Siegelvorrichtung korrekt zusammengeführt werden.

Vorzugsweise wird der Folienabschnitt quer ausgerichtet auf dem in Produktionsrichtung rechten und linken Rand der Verpackung angesiegelt, um eine einfache Ausführung der Siegelleisten zu ermöglichen, die auch auf einfache Weise nach dem Siegelprozess entgegen der Produktionsrichtung verfahren werden, um für die nächste Verpackung bereit zu stehen.

In einer besonders vorteilhaften Ausführung wird jede Verpackung vor dem Zuführen in die Siegelstation gewogen und das Gewicht an die Steuerung übermittelt, um die Packung mit einem Preis auszeichnen zu können.

Vorzugsweise druckt ein Drucker Produktinformationen, Codes oder Gewichts- und Preisangaben auf jeden Folienabschnitt oder auf die Folienbahn auf, wobei diese Angaben bevorzugt von der Steuerung an den Drucker übermittelt werden.

Die Folienabschnitte werden bevorzugt mittels einer Schneidvorrichtung von einer Folienbahn abgetrennt, um sie dann der Siegelstation zuzuführen. Dies erlaubt beispielsweise Anpassungen an unterschiedlich breite Verpackungen.

Die Folienabschnitte können in einer Querausrichtung in Produktionsrichtung oder in einer Längsausrichtung quer zur Produktionsrichtung der Folienzuführvorrichtung zugeführt werden.

Im Folgenden wird ein vorteilhaftes Ausführungsbeispiel der Erfindung anhand einer Zeichnung näher dargestellt. Dabei zeigen:
Fig. 1 eine Seitenansicht einer erfindungsgemäßen Siegelvorrichtung,
Fig. 2 die Siegelstation in Produktionsrichtung,
Fig. 3 vergrößerte Darstellung der Siegelelemente und
Fig. 4 eine Draufsicht auf eine Verpackung mit einem aufgesiegelten Folienabschnitt.

Gleiche Komponenten sind in den Figuren durchgängig mit gleichen Bezugszeichen versehen.

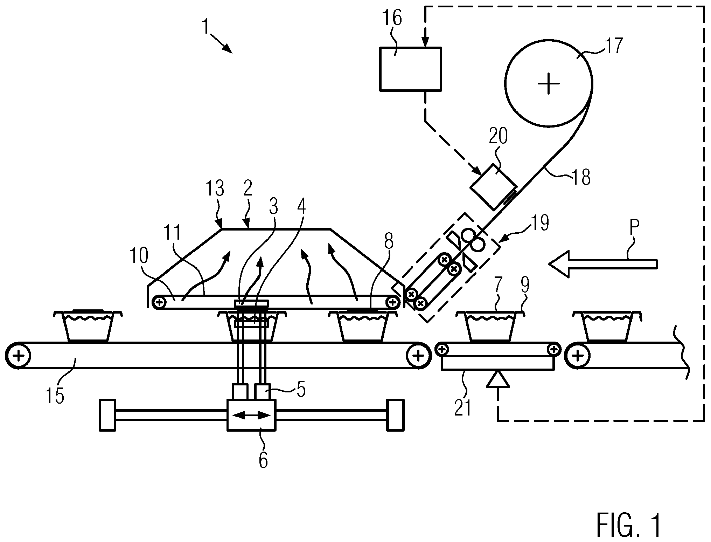

Figur 1 zeigt eine erfindungsgemäße Siegelvorrichtung 1 mit einer Siegelstation 2. Die Siegelstation 2 umfasst obere Siegelelemente 3 und untere Siegelelemente 4, die zum Einen vertikal mittels Verstellantrieben 5 relativ zueinander in eine Siegelstellung bewegbar sind und zum Anderen gemeinsam entlang einer Produktionsrichtung P mittels einer Verfahreinheit 6 verfahrbar sind. Alternativ können auch nur die unteren Siegelelemente 4 vertikal bewegbar sein, um in die Siegelstellung bewegt werden zu können. In der Siegelstellung klemmen die oberen 3 und unteren Siegelelemente 4 eine Verpackung 7 und einen Folienabschnitt 8 gegeneinander. Da die oberen 3 und/oder unteren Siegelelemente 4 beheizbar sind, wird beim Siegelprozess der Folienabschnitt 8 auf einen Teil eines umlaufenden Rands 9 der Verpackung 7 gesiegelt. Die Verfahreinheit 6 kann beispielsweise als Elektrolinearantrieb, Spindelantrieb oder als servoangetriebender Riemenantrieb ausgeführt sein. Die Verstellantriebe 5 sind beispielsweise als Pneumatikzylinder ausführbar. Die Siegelelemente 3, 4 können austauschbar sein, um die Siegelvorrichtung 1 für verschiedene Breiten des Folienabschnitts 8 umzurüsten.

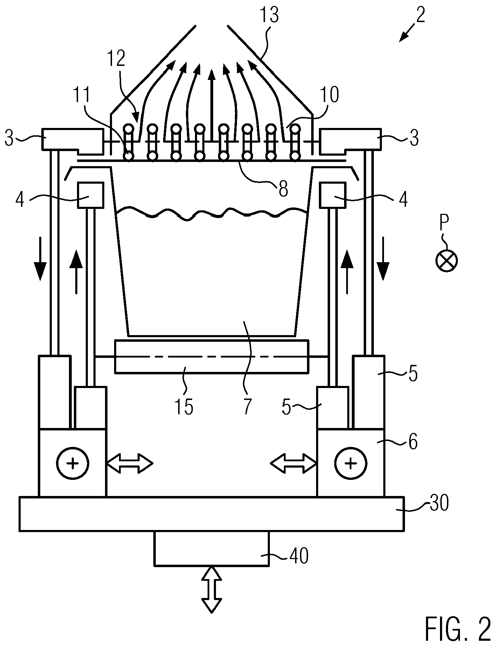

Der Folienabschnitt 8 wird in einer Querausrichtung mittels einer Folienzuführvorrichtung 10 entlang der Siegelstation 2 parallel oder annähernd parallel zur Verfahreinheit 6 der Siegelelemente 3, 4 transportiert. In der dargestellten Ausführung weist die Folienzuführvorrichtung 10, wie in Figur 2 näher dargestellt, mehrere Rundriemen 11 auf. Durch den zwischen den Rundriemen 11 vorhanden Spalt 12 wirkt eine Absaugvorrichtung 13 derart, dass der Folienabschnitt 8 mit seiner Oberseite am unteren Trum der Rundriemen 11, der in Produktionsrichtung P bewegt wird, gehalten wird. Die Verpackungen 7 werden mittels einer Transportvorrichtung 15 beispielsweise in Form eines Transportbandes parallel zur Verfahreinheit 6 in Produktionsrichtung P der Siegelstation 2 zugeführt. Eine Steuerung 16 ist dazu konfiguriert, die Geschwindigkeiten der Verfahreinheit 6 und der Folienzuführvorrichtung 10 mit der Transportvorrichtung 15 derart aufeinander abzustimmen, dass die relative Lage des Folienabschnitts 8 zur Verpackung 7 erzeugt wird und alle drei Geschwindigkeiten wenigstens während des Siegelprozesses zueinander synchronisiert sind.

Die Siegelvorrichtung 2 umfasst des Weiteren eine Abrollvorrichtung 17 für eine Folienbahn 18. Zwischen der Abrollvorrichtung 17 und der Folienzuführvorrichtung 10 ist eine Schneidvorrichtung 19 zum Erzeugen von einzelnen Folienabschnitten 8 vorgesehen. Optional kann zwischen der Abrollvorrichtung 17 und der Schneidvorrichtung 19 ein Drucker 20 vorgesehen sein, um Produktinformationen, Codes und/oder Gewichts- und Preisangaben auf die Folienbahn 18 aufzubringen. Die vereinzelten Folienabschnitte 8 können von der Schneidvorrichtung 19 von der Folienzuführvorrichtung 10 übernommen und zur Siegelstation 2 transportiert werden.

Stromaufwärts der Transportvorrichtung 15 für die Verpackungen 7 kann optional eine Wiegevorrichtung 21 zum dynamischen Wiegen von einzelnen Verpackungen 7 während des kontinuierlichen Transportes vorgesehen sein. Das dabei ermittelte Gewicht wird an die Steuerung 16 übermittelt, die ihrerseits über hinterlegte Vorgaben ein Produktgewicht und einen dafür entsprechenden Preis berechnet und diese Informationen an den Drucker weitergibt. Eine in der Steuerung 16 vorgesehene Streckensteuerung sorgt dafür, dass die Informationen einer gewogenen Verpackung 7 auf der Folienbahn 18 aufgedruckt werden und diese Verpackung 7 mit dem entsprechenden Folienabschnitt 8 in der Siegelstation 2 zusammen geführt und mittels der Siegelelemente 3, 4 miteinander versiegelt werden. Es können auch Sensoren für die Erfassung der einzelnen Verpackungen 7 und/oder der einzelnen Folienabschnitte 8 entlang der Siegelvorrichtung 1 vorgesehen sein, um diese Informationen der Steuerung 16 für die Streckensteuerung zur Verfügung zu stellen.

Figur 2 zeigt die Siegelstation 2 in Produktionsrichtung P. Der Folienabschnitt 8 wird durch die Sogwirkung der Absaugvorrichtung 13 an den Rundriemen 11 der Folienzuführvorrichtung 10 gehalten und prozesssicher transportiert. Die Verpackung 7 wird auf der Transportvorrichtung 15 synchron mit dem Folienabschnitt 8 bewegt, sobald die Lage des Folienabschnitts 8 zur Verpackung 7 der gewünschten Siegelposition entspricht. Die oberen Siegelelemente 3 und die unteren Siegelelemente 4 befinden sich in dieser Darstellung in einer geöffneten Stellung. Kurz vor dem Siegelvorgang bewegen sich die Siegelelemente 3, 4 über die auf die Transportvorrichtung 15 und/oder Folienzuführvorrichtung 10 synchronisierte Verfahreinheit 6 mit der Verpackung 7 und dem Folienabschnitt 8 mit. Dann bewegen sich die Siegelelemente 3, 4 aufeinander zu in eine geschlossen Stellung, um den Folienabschnitt 8 auf die Verpackung 7 zu klemmen, indem die unteren Siegelelemente 4 nach oben und die oberen Siegelelemente 3 nach unten fahren mittels jeweiliger oder gemeinsamer Verstellantriebe 5.

Die Synchronisierung der Folienzuführvorrichtung 10, der Transporteinrichtung 10 und der Verfahreinheit 6 kann über die Ansteuerung der jeweiligen nicht näher dargestellten Antriebe durch die Steuerung 16 erfolgen.

Die Verfahreinheit 6 umfasst eine Querverstellung 30 zum Verstellen quer zur Produktionsrichtung P der gegenüberliegenden Siegelelemente 3, 4 zueinander, um die Siegelvorrichtung 1 auf verschiedene Breiten von Verpackungen 7 anpassen zu können. Die Verfahreinheit 6 ist auch mittels einer Höhenverstellung 40 vertikal einstellbar, um auf verschiedenen Verpackungshöhen bzw. Ränder 9 der Verpackungen 7 einstellen zu können.

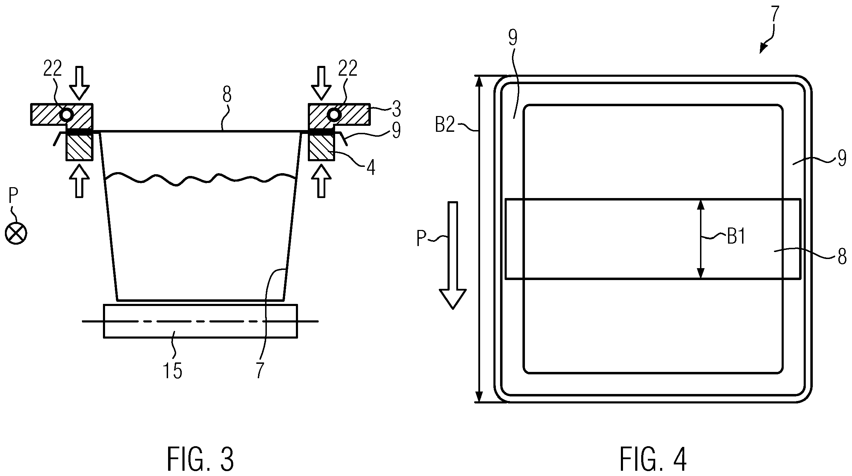

Figur 3 zeigt die geschlossene Stellung, in der der Folienabschnitt 8 an zwei gegenüberliegenden Seiten, in Produktionsrichtung P rechts und links, mit Druck auf den Rand 9 der Verpackung 7 gedrückt wird und durch die erwärmten oberen Siegelelemente 3 eine entsprechend notwendige Wärmeenergie eingebracht wird, um den Folienabschnitt 8 beidseitig auf den Rand 9 zu siegeln. Danach entfernen sich die Siegelemente 3, 4 wieder so weit auseinander in die geöffnete Stellung, dass die Verpackung 7 gemeinsam mit dem angesiegelten Folienabschnitt 8 mittels der Transportvorrichtung 15 in Produktionsrichtung P weiter gefördert werden kann. Die oberen Siegelelemente 3 sind jeweils mittels einer Heizvorrichtung 22 beispielsweise in Form von Heizpatronen erwärmbar.

Figur 4 zeigt eine Draufsicht auf eine Verpackung 7 mit einem aufgesiegelten Folienabschnitt 8. Die Breite B1 des Folienabschnitts 8 ist schmaler als die Breite B2 der Verpackung 7 in Produktionsrichtung P, bzw. in derselben Richtung gemessen wie die Breite des Folienabschnitts 8.

## Patentansprüche

1. Siegelvorrichtung (1) für Verpackungen (7), umfassend eine Steuerung (16), eine Siegelstation (2), eine Abrollvorrichtung (17) für eine Folienbahn (18), eine stromaufwärts der Siegelstation (2) vorgesehene Schneidvorrichtung (19) zum Erzeugen von Folienabschnitten (8) der Folienbahn (18), eine Folienzuführvorrichtung (10) zum Zuführen der Folienabschnitte (8) an die Siegelstation (2), eine Transportvorrichtung (15) zum Transportieren von Verpackungen (7), in denen vorzugsweise Lebensmittel gasdicht verpackt sind, in die Siegelstation (2), wobei die Siegelstation (2) obere (3) und untere Siegelelemente (4) umfasst, die dazu konfiguriert sind, die Verpackung (7) und den Folienabschnitt (8) gemeinsam zwischen den unteren und oberen Siegelelementen (3, 4) zu klemmen und den Folienabschnitt (8) an die Verpackung (7) zu siegeln, **dadurch gekennzeichnet, dass** die Siegelelemente (3, 4) während des Siegelprozesses synchron mit der sich kontinuierlich bewegenden Verpackung (7) mitbewegbar sind.

2. Siegelvorrichtung nach Anspruch 1, **dadurch gekennzeichnet, dass** die Folienzuführvorrichtung (10) mehrere Rundriemen (11) aufweist.

3. Siegelvorrichtung nach einem der vorherigen Ansprüche, **dadurch gekennzeichnet, dass** die Folienzuführvorrichtung (10) eine Absaugvorrichtung (13) umfasst.

4. Siegelvorrichtung nach einem der vorherigen Ansprüche, **dadurch gekennzeichnet, dass** eine Wiegevorrichtung (21) zum dynamischen Wiegen einzelner Verpackungen (7) vorgesehen ist.

5. Siegelvorrichtung nach einem der vorherigen Ansprüche, **dadurch gekennzeichnet, dass** ein Drucker (20) vorgesehen ist, um Gewichts- und Preisangaben auf die Folienbahn (18) oder die Folienabschnitte (8) aufzudrucken.

6. Siegelvorrichtung nach einem der vorherigen Ansprüche, **dadurch gekennzeichnet, dass** die Siegelelemente (3, 4) kürzer als die Ränder (9) der Verpackungen (7), an die der Folienabschnitt (8) angesiegelt wird, sind.

7. Siegelvorrichtung nach einem der vorherigen Ansprüche, **dadurch gekennzeichnet, dass** eine Verfahreinheit (6) zum Bewegen der Siegelelemente (3, 4) entlang einer Produktionsrichtung (P) vorgesehen ist, vorzugsweise einen Servoantrieb aufweisend.

8. Siegelvorrichtung nach einem der vorherigen Ansprüche, **dadurch gekennzeichnet, dass** wenigstens die unteren Siegelemente (4) mittels eines oder mehrerer Verstellantriebe (5) vertikal oder zu den entsprechenden oberen Siegelementen (3) bewegbar sind.

9. Siegelvorrichtung nach einem der vorherigen Ansprüche, **dadurch gekennzeichnet, dass** die Siegelvorrichtung (1) eine Querverstellung (30) und/oder eine Höhenverstellung (40) umfasst, um die Siegelelemente (3, 4) auf verschiedene Geometrien von Verpackungen (7) einzustellen.

10. Verfahren zum Betrieb einer Siegelvorrichtung (1) mit einer Steuerung (16) zum Aufbringen eines Folienabschnitts (8) mit einer geringeren Breite (B1) als die Breite (B2) der Verpackung (7), an die der Folienabschnitt (8) angesiegelt wird, und zum Ansiegeln des Folienabschnitts (8) an lediglich zwei gegenüberliegende Ränder (9) der Verpackung (7), **dadurch gekennzeichnet, dass** die oberen Siegelemente (3) und die unteren Siegelemente (4) während des Siegelprozesses mit einer gemeinsamen synchronen Geschwindigkeit zusammen mit dem Folienabschnitt (8) und der Verpackung (7) in der Produktionsrichtung (P) bewegt werden.

11. Verfahren nach Anspruch 10, **dadurch gekennzeichnet, dass** die Steuerung (16) eine Streckensteuerung aufweist, um die Position der Folienabschnitte (8) und der Verpackungen (7) derart zu verfolgen, dass die Zusammenführung eines Folienabschnitts (8) und der dazugehörigen Verpackung (7) gesteuert und/oder kontrolliert wird.

12. Verfahren nach einem der Ansprüche 10 bis 11, **dadurch gekennzeichnet, dass** der Folienabschnitt (8) quer ausgerichtet auf dem in Produktionsrichtung (P) rechten und linken Rand (9) der Verpackung (7) angesiegelt wird.

13. Verfahren nach einem der Ansprüche 10 bis 12, **dadurch gekennzeichnet, dass** jede Verpackung (7) vor dem Zuführen in die Siegelstation (2) gewogen wird und das Gewicht an die Steuerung (16) übermittelt wird.

14. Verfahren nach einem der Ansprüche 10 bis 13, **dadurch gekennzeichnet, dass** ein Drucker (20) Gewichts- und Preisangaben auf jeden Folienabschnitt (8) oder auf die Folienbahn (18) aufdruckt, wobei diese Angaben bevorzugt von der Steuerung (16) an den Drucker (20) übermittelt werden.

15. Verfahren nach einem der Ansprüche 10 bis 14, **dadurch gekennzeichnet, dass** die Folienabschnitte (8) mittels einer Schneidvorrichtung (15) von einer Folienbahn (18) abgetrennt werden.
